(19) Europäisches Patentamt
European Patent Office
Office européen des brevets

(11) **EP 2 932 634 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **13801562.3**

(22) Anmeldetag: **04.12.2013**

(51) Int Cl.:
*H04J 3/06* (2006.01)     *H04Q 9/00* (2006.01)
*G01D 21/00* (2006.01)

(86) Internationale Anmeldenummer:
**PCT/EP2013/075554**

(87) Internationale Veröffentlichungsnummer:
**WO 2014/090657 (19.06.2014 Gazette 2014/25)**

(54) **ZUWEISEN VON ZEITSTEMPELN ZU EMPFANGENEN DATENPAKETEN**

ASSIGNING TIMESTAMPS TO RECEIVED DATA PACKETS

ATTRIBUTION D' HORODATAGE AUX PACQUETS DE DONNÉES RECUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2012 DE 102012222885**

(43) Veröffentlichungstag der Anmeldung:
**21.10.2015 Patentblatt 2015/43**

(73) Patentinhaber: **Bayerische Motoren Werke Aktiengesellschaft**
**80809 München (DE)**

(72) Erfinder:
• **BARTSCH, Armin**
**80634 München (DE)**
• **KLANNER, Felix**
**639664 Singapore (SG)**
• **KLÖDEN, Horst**
**80797 München (DE)**
• **RAUCH, Andreas**
**85777 Kammerberg (DE)**

(56) Entgegenhaltungen:
**US-B1- 7 937 232**

• **TOBIAS HUCK ET AL: "Precise timestamping and temporal synchronization in multi-sensor fusion", INTELLIGENT VEHICLES SYMPOSIUM (IV), 2011 IEEE, IEEE, 5. Juni 2011 (2011-06-05), Seiten 242-247, XP031998982, DOI: 10.1109/IVS.2011.5940472 ISBN: 978-1-4577-0890-9 in der Anmeldung erwähnt**
• **ELMAR MAIR ET AL: "Spatio-temporal initialization for IMU to camera registration", ROBOTICS AND BIOMIMETICS (ROBIO), 2011 IEEE INTERNATIONAL CONFERENCE ON, IEEE, 7. Dezember 2011 (2011-12-07), Seiten 557-564, XP032165843, DOI:10.1109/ROBIO.2011.6181345 ISBN: 978-1-4577-2136-6**

**Beschreibung**

Die Erfindung betrifft ein Verfahren zum Zuweisen eines Zeitstempels zu einem betrachteten empfangenen Datenpaket, eine entsprechende Vorrichtung und ein entsprechendes Computerprogramm.

Heutige Fahrzeuge verfügen gelegentlich über Fahrerassistenzsysteme, die vielfältige Funktionen wie Notbremsungen oder die Erkennung von Fahrstreifen bereitstellen. Ebenso bestehen Überlegungen durch zentrale Verarbeitungseinheiten in Fahrzeugen Umfeldmodelle errechnen zu lassen, die wiederum als Ausgangsdaten für Fahrerassistenzsysteme dienen können. Zu diesen Zwecken sind in Fahrzeugen Sensoren vorgesehen, die Messungen der Eigenschaften der Umgebung des Fahrzeugs oder des Fahrzeugs selbst vornehmen. Die Messdaten der Sensoren werden typischerweise über einen Bus, wie einen CAN Bus, von den Sensoren zu der oder den verarbeitenden Einheiten übertragen.

Da sich die Umgebung eines Fahrzeugs in aller Regel bei der Benutzung ändert, weil sich das Fahrzeug oder andere Verkehrsteilnehmer bewegen, ist bei der Verarbeitung der Messdaten der Zeitpunkt, zu dem die Messdaten von dem Sensor erfasst wurden, von Bedeutung. Die Sensormessung bezieht sich dann nämlich auf die Umgebung, wie sie zu einem bestimmten Zeitpunkt bestand. Für einen anderen Zeitpunkt hat die Sensormessung nur verringerte oder sogar keine Aussagekraft.

Aus diesem Grund ist es generell wünschenswert, zu einer Messung eines Sensors auch die Zeit anzugeben, zu der diese ausgeführt wurde. Eine Angabe dieser Art wird als Zeitstempel bezeichnet. Dabei ist es wesentlich, dass auf zuverlässige Art durch die Verarbeitungseinheit der Zeitpunkt der Messung in ihrer eigenen Zeitfortschreibung bestimmt werden kann, da auf dieser Basis die Verarbeitung der Messdaten stattfindet und da meist nur diese in Bezug zur realen Umgebung des Fahrzeugs gesetzt werden kann. Besondere Relevanz erfährt diese Anforderung bei der Verknüpfung beziehungsweise Fusion von Daten mehrerer Sensoren. Ohne eine zeitliche Einordnung der Daten mehrerer Sensoren zueinander ist deren gemeinsame Verarbeitung nicht sinnvoll möglich.

Häufig jedoch sind Sensoren nicht dazu eingerichtet zu den ausgegebenen Messdaten auch einen Zeitstempel oder eine zweckähnliche Angabe auszugeben, mit deren Hilfe die Verarbeitungseinheit zuverlässig den Zeitpunkt der Messung feststellen könnte. Selbst wenn ein Sensor über eine für die Erstellung eines Zeitstempel generell geeignete Zeitfortschreibung verfügt, so ist diese meist nicht mit der für die Verarbeitung wesentlichen Zeitfortschreibung der Verarbeitungseinheit synchronisiert und oft Fehlern ausgesetzt wie einer Drift. Im Ergebnis kann deshalb von den meisten Sensoren kein verwendbarer Zeitstempel für ihre Messdaten bereitgestellt werden.

Ein offensichtlicher Lösungsansatz trotzdem Zeitstempel für die an der Verarbeitungseinheit eingehenden Sensordaten bereitzustellen, ist es, den jeweiligen Sensordaten deren Ankunftszeit an der Verarbeitungseinheit als Zeitstempel zuzuweisen. Dieses Vorgehen hat jedoch nicht nur den Nachteil, dass der zugewiesene Zeitstempel einen Zeitpunkt angibt, der generell gegenüber dem Zeitpunkt der echten Messung verzögert ist, sondern auch, dass die Verzögerung in der Praxis nicht konstant ist. Letzteres beruht darauf, dass die Laufzeit eines Datenpakets vom Sensor bis zur Verarbeitungseinheit verschiedenen zufälligen Einflüssen, wie Auslastungen des auch von anderen unabhängigen Teilnehmern genutzten Übertragungsbusses, Scheduling der Verarbeitungseinheit oder von zwischengeschalteten Puffern oder anderen vergleichbaren Einflüssen ausgesetzt ist. Die Übertragungszeit unterliegt damit Fluktuationen, auch Jitter genannt. Abhängig von dem Zweck der Sensordaten, der Frequenz der Messungen des Sensors oder inwieweit die Verwendung zeitkritisch ist, kann dieser Jitter dazu führen, dass die empfangenen Sensordaten basierend auf einem derart bestimmten Zeitstempel nur eingeschränkt oder gar nicht verwendbar sind.

Ausgehend von dem oben dargestellten Lösungsansatz sind im Stand der Technik Verfahren vorgeschlagen worden, mit denen auf verbesserte Art Zeitstempel für Sensoren bestimmt werden können, die Messungen und Ausgaben von Sensordaten zumindest annähernd zyklisch durchführen. Aufgrund des häufigen Einsatzes derartiger Sensoren sind diese Verfahren weithin anwendbar.

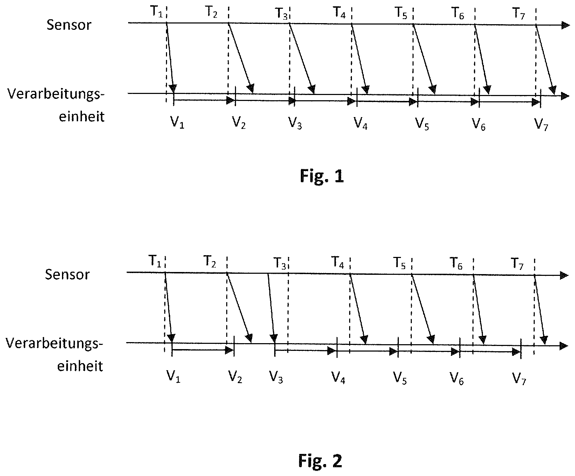

In der Veröffentlichung "Precise Timestamping and Temporal Synchronization in Multi-Sensor Fusion", Tobias Huck et al., Intelligent Vehicles Symposium (IV), 2011, IEEE, Seiten 242 bis 247 wird ein derartiges Verfahren detailliert vorgestellt. Gemäß diesem wird die Zyklizität der Sensormessungen ausgenutzt um durch Beobachtung mehrerer Zyklen (mithilfe der Ankunftszeiten empfangener Datenpakete) auf die Zykluszeit des Sensors rückzuschließen beziehungsweise diese zu schätzen. Tatsächlich kommt hierfür ein Kalmannfilter zum Einsatz. Der Zeitstempel, der einem Datenpaket dann zugewiesen wird, wird folgendermaßen bestimmt: Es wird ausgehend von der Ankunftszeit des Datenpakets, das die kürzeste von der Verarbeitungseinheit bestimmte Laufzeit aufweist (der sogenannte Ankerzeitpunkt), anhand eines Multiplen der geschätzten Zykluszeit einem diesem Datenpaket nachfolgenden Datenpaket ein Zeitstempel zugewiesen. Auf diese Weise kommt die beste verfügbare Näherung des tatsächlichen Messzeitpunkts des Sensors (nämlich die Ankunftszeit des Pakets mit der kürzesten Laufzeit) allen nachfolgenden Datenpaketen zugute. Die zugewiesenen Zeitstempel sind darüber hinaus von Fluktuationen der Größe eines Jitters befreit. Weitere Erklärungen hierzu sind im Abschnitt "Algorithm II" der genannten Veröffentlichung gegeben. Fig. 1 gibt noch einmal schematisch das Prinzip wieder. Der Sensor führt Messungen durch, die idealerweise dem durch $T_1$, $T_2$, ... dargestellten Zyklus folgen und sendet darauf basierend Datenpakete an die Verarbeitungseinheit. Diese Datenpakte durchlaufen eine Verzögerung (dargestellt durch die nach unten weisenden Pfeile) und erreichen die Verarbeitungseinheit zu einem Ankunftszeitpunkt. Das Datenpaket mit der kürzesten Laufzeit ist hier das Datenpaket, das zu $T_1$ gesendet wurde. Die Ankunftszeit dieses Datenpaketes bildet den Ankerzeitpunkt (anders ausgedrückt: der Ankerzeitpunkt wird gesetzt). Für dieses Datenpaket ist die Ankunftszeit gleich dem Zeitstempel, hier $V_1$. Basierend auf diesem Ankerzeitpunkt werden die Zeitstempel $V_1$, $V_2$, $V_3$ ... zugewiesen. Dabei wird ausgehend von $V_1$ für jedes nachfolgende Datenpaket die geschätzte Zykluszeit (dargestellt durch die horizontalen Pfeile) hinzuaddiert. In diesem Beispiel soll angenommen werden, dass die Zykluszeit fehlerfrei geschätzt wird. Wie direkt ersichtlich ist, sind die zugewiesenen Zeitstempel $V_2$, $V_3$, ... stets früher als die tatsächliche Ankunftszeit der Datenpakete und damit bessere Schätzungen für den tatsächlichen Messzeitpunkt des Sensors.

Das in der oben genannten Veröffentlichung offenbarte Verfahren lässt allerdings ein Phänomen unberücksichtigt, die zu ungenau zugewiesenen Zeitstempeln führen können. Dies betrifft den Fall, dass der Sensor gegebenenfalls aufgrund temporärer äußerer Einflüsse eine einzelne Messung (oder eine Gruppe von Messungen) im Vergleich zu seinem Zyklus früher ausführt. Dem Sensor unterläuft also ein "Ausreißer". Ein Problem entsteht dann, wenn der Sensor eine Messung zu einem derart frühen Zeitpunkt ausführt, dass die Ankunftszeit des daraus resultierenden Datenpakets vor dem Zeitpunkt liegt, zu dem in seinem normalen Zyklus Messungen stattfinden, und wenn der Sensor dann zu diesem ursprünglichen Zyklus zurückkehrt. In einem solchen Fall liegen die zugewiesenen Zeitstempel für alle folgenden Messungen vor dem tatsächlichen Messzeitpunkt und sind damit falsch. Fig. 2 illustriert dieses Phänomen schematisch aufbauend auf dem Schema der Fig. 1 unter der Annahme einer fehlerfreien Schätzung der Zykluszeit. Die Messung des Sensors, die eigentlich zum Zeitpunkt $V_3$ auszuführen wäre, wird verfrüht ausgeführt. Das darauf basierende Datenpaket erreicht die Verarbeitungseinheit vor dem Zeitpunkt $V_3$ und gleichzeitig als das Datenpaket mit der kürzesten Laufzeit gemäß dem Algorithmus der oben genannten Veröffentlichung. Die Ankunftszeit dieses Datenpakets ($V_3$) wird daraufhin der neue Ankerzeitpunkt des Verfahrens (anders ausgedrückt: der Ankerzeitpunkt wird neu gesetzt). Für dieses Datenpaket und für zukünftige Datenpakete wird der zugewiesene Zeitstempel ausgehend von diesem Ankerzeitpunkt berechnet. Wie ersichtlich ist, sind die zugewiesenen Zeitstempel $V_3$, $V_4$, $V_5$ ... zu früh im Vergleich zu den tatsächlichen Messzeitpunkten und auch ihr absoluter Fehler im Vergleich zu den tatsächlichen Messzeitpunkten ist größer als zuvor für $V_1$ und $V_2$. Gemäß dem Algorithmus der oben genannten Veröffentlichung wird der Ankerzeitpunkts also aufgrund eines Ausreißers zu früh gesetzt.

Aufgabe an den Fachmann ist die robuste Bestimmung des Ankerzeitpunktes zum Zeitstempeln von eingehenden Datenpaketen.

Die Aufgabe wird durch ein Verfahren nach Anspruch 1, eine Vorrichtung nach Anspruch 11, ein Fahrzeug nach Anspruch 12 und ein Computerprogramm nach Anspruch 13 gelöst. Vorteilhafte Weiterbildungen sind in den abhängigen Ansprüchen definiert.

In einem Aspekt umfasst ein Verfahren zum Zuweisen eines Zeitstempels zu einem betrachteten Datenpaket, das ebenso wie eine Gruppe empfangener Datenpakete von einem zyklisch arbeitenden Sensor empfangen wird, wobei das betrachtete Datenpaket insbesondere in der Gruppe empfangener Datenpakete umfasst ist: Bestimmen der Ankunftszeit für jedes Datenpaket der Gruppe von empfangenen Datenpaketen; Zuweisen eines Zeitstempels zu jedem Datenpaket der Gruppe von Datenpaketen basierend auf einem ersten Ankerzeitpunkt; Bestimmen des Zeitunterschiedes zwischen der bestimmten Ankunftszeit und dem zugewiesenen Zeitstempel für jedes Datenpaket der Gruppe von Datenpaketen, hierin Gruppe von Zeitunterschieden genannt; Bestimmen der Zeitunterschiede aus der Gruppe von Zeitunterschieden, für deren Datenpakete eine frühere Ankunftszeit als der jeweilige zugewiesene Zeitstempel bestimmt wurde, hierin negative Zeitunterschiede genannt; Bestimmen der negativen Zeitunterschiede, die nicht als Ausreißer zu klassifizieren sind; Bestimmen eines zweiten Ankerzeitpunktes unter Berücksichtigung der negativen Zeitunterschiede, die nicht als Ausreißer zu klassifizieren sind; Zuweisen eines Zeitstempels zu dem betrachteten Datenpaket basierend auf dem zweiten Ankerzeitpunkt. Die Bestimmung der negativen Zeitunterschiede, die nicht als Ausreißer zu klassifizieren sind, umfasst für jeden negativen Zeitunterschied die Prüfung, ob er kein Ausreißer ist. Durch das Verfahren wird nicht ausgeschlossen, dass die zweiten Ankerzeitpunkte auch unter Berücksichtigung der negativen Zeitunterschiede bestimmt wird, die zwar nicht klar als Ausreißer zu klassifizieren sind, aber auch nicht klar nicht als Ausreißer zu klassifizieren sind. Diese Zeitunterschiede, die Grenzfälle darstellen, können also berücksichtigt werden.

Bei der Zuweisung des Zeitstempels zu dem betrachteten Datenpaket wird über den zweiten Ankerzeitpunkt die Ankunftszeit von mehreren Datenpaketen berücksichtigt. In den bisher bekannten Verfahren wurde als Ankerzeitpunkt für die Bestimmung des Zeitstempels stets nur eine einzige Ankunftszeit berücksichtigt, nämlich die bis dahin früheste bezogen auf den Zyklus des Sensors. Wenn diese früheste Ankunftszeit allerdings nicht repräsentativ für die tatsächlichen Messzeitpunkte ist, weil es sich um einen Ausreißer handelt, entsteht ein Fehler. Gemäß dem hier vorgestellten Verfahren wird der zweite Ankerzeitpunkt aufgrund der Betrachtung einer Gruppe von Datenpaketen gesetzt. Dies ermöglicht die Erkennung von Ausreißern und die Vermeidung eines zu früh gesetzten Ankerzeitpunktes.

Wenn ein ansonsten zyklisch stabil arbeitender Sensor aufgrund äußerer Einflüsse eine Messung verfrüht ausführt und somit einen Ausreißer erzeugt, pflanzt sich dieser Ausreißer fort. Die Ankunftszeit stellt dann gegenüber den Ankunftszeiten anderer Datenpakete einen Ausreißer dar, ebenso wie der zu diesem Datenpaket zugewiesene Zeitunterschied.

In einer typischen Implementierung werden die Zeitunterschiede als die Differenz zwischen dem zugewiesenen Zeitstempel und der bestimmten Ankunftszeit bestimmt, wobei der Zeitstempel von der Ankunftszeit abgezogen wird. Die hierin negative Zeitunterschiede genannten Zeitunterschiede haben somit typischerweise Zahlenwerte kleiner Null.

Die Gruppe von Datenpakten umfasst typischerweise eine größere Menge von Datenpaketen, beispielsweise 10, 100 oder 1000 Datenpakete. Eine Gruppe von Datenpaketen muss nicht notwendigerweise alle unmittelbar aufeinanderfolgend empfangenen Datenpakete enthalten, sondern kann auch nur jedes zweite, dritte oder zufällig ausgewählte Datenpaket der aufeinanderfolgend empfangenen Datenpakete umfassen. Der kleinste Zeitunterschied kann sich auf den Betrag des Zeitunterschiedes beziehen. Die negativen Zeitunterschiede, die nicht als Ausreißer zu klassifizieren sind, können alle negativen Zeitunterschiede umfassen, wenn kein negativer Zeitunterschied als Ausreißer zu klassifizieren ist.

Es kann vorgesehen sein, dass bis auf die letzten drei Schritte (Bestimmen der negativen Zeitunterschiede, Bestimmten des zweiten Ankerzeitpunktes, Zuweisen eines Zeitstempels zum betrachteten Datenpaket), alle Schritte des Verfahrens in Einzelschritten für jedes (oder jedes zweite, dritte oder zufällig gewählte) empfangene Datenpaket ausgeführt werden, was jeweils ein Unterfall der Schritte des Verfahrens (bis auf die letzten drei Schritte) ist. Insbesondere wird also jedem Datenpaket bei dessen Empfang der an der Verarbeitungseinheit ein Zeitstempel zugewiesen.

Falls keine negativen Zeitunterschiede bestimmt werden können (weil beispielsweise alle zugewiesenen Zeitstempel später liegen als die bestimmten Ankunftszeiten) dann kann vorgesehen sein, dass alle auf den negativen Zeitunterschieden aufbauenden Schritte des Verfahrens nicht ausgeführt werden. Diese Schritte wären Bestimmen der negativen Zeitunterschiede, die nicht als Ausreißer zu klassifizieren sind; Bestimmen eines zweiten Ankerzeitpunktes unter Berücksichtigung der negativen Zeitunterschiede, die nicht als Ausreißer zu klassifizieren sind; Zuweisen eines Zeitstempels zu dem betrachteten Datenpaket basierend auf dem zweiten Ankerzeitpunkt. Gegebenenfalls kann stattdessen vorgesehen sein, einen Zeitstempel zu dem betrachteten Datenpaket basierend auf dem ersten Ankerzeitpunkt zu bestimmen.

Falls keine negativen Zeitunterschiede bestimmt werden können, die nicht als Ausreißer zu klassifizieren sind (weil beispielsweise alle negativen Zeitunterschiede als Ausreißer zu klassifiziert sind), dann kann vorgesehen sein, dass alle auf diesen aufbauenden Schritte nicht ausgeführt werden. Diese Schritte wären Bestimmen eines zweiten Ankerzeitpunktes unter Berücksichtigung der negativen Zeitunterschiede, die nicht als Ausreißer zu klassifizieren sind; Zuweisen eines Zeitstempels zu dem betrachteten Datenpaket basierend auf dem zweiten Ankerzeitpunkt. Gegebenenfalls kann stattdessen vorgesehen sein, einen Zeitstempel zu dem betrachteten Datenpaket basierend auf dem ersten Ankerzeitpunkt zu bestimmen.

Weiterhin kann vorgesehen sein, das Verfahren für eine neue Gruppe von Datenpaketen auszuführen. Der zweite Ankerzeitpunkt dient dann zur Bestimmung von Zeitstempeln für die neue Gruppe von Datenpaketen.

In einer vorteilhaften Weiterbildung kann vorgesehen sein, für das betrachtete Datenpaket einen adaptierten Zeitstempel zu bestimmen. Für diesen adaptierten Zeitstempel wird eine minimale Verarbeitungszeit vom Zeitstempel abgezogen. Die minimale Verarbeitungszeit entspricht der Zeit, die ein Datenpaket mindestens zur Übertragung vom Sensor zur Verarbeitungseinheit benötigt. Auf diese Weise kann der tatsächliche Messzeitpunkt des Sensors noch besser geschätzt werden. Gerade bei Verwendung eines adaptierten Zeitstempels ergibt sich häufig die Gefahr, dass eine verfrühte Messung eines Sensors aufgrund eines Ausreißers (gemäß dem oben mit Bezug auf Fig. 2 dargestellten Problem) zu einem adaptierten Zeitstempel führt, der vor dem tatsächlichen Messzeitpunkt des Sensors liegt. Insbesondere bei der Verwendung dieses adaptierten Zeitstempels ist deshalb eine Vermeidung eines Setzens eines zu frühen Ankerzeitpunktes und damit von zu frühen Zeitstempeln (bezogen auf die tatsächlichen zyklischen Messzeitpunkte des Sensors) wichtig.

In einer Weiterbildung umfasst das Bestimmen der negativen Zeitunterschiede, die nicht als Ausreißer zu klassifizieren sind, Folgendes: Bestimmen eines Schwellwertes basierend auf den bestimmten negativen Zeitunterschieden; Bestimmen der negativen Zeitunterschiede, die innerhalb des Schwellwertes liegen, insbesondere der negativen Zeitunterschiede, deren Betrag kleiner als der Betrag des Schwellwertes ist. Die Ausreißer unter den negativen Zeitunterschieden werden also durch den Vergleich mit einem Schwellwert erkannt. Zeitunterschiede, die innerhalb des Schwellwertes liegen werden dementsprechend nicht als Ausreißer angesehen. Der Schwellwert selbst wird unter Berücksichtigung der negativen Zeitunterschiede bestimmt.

Der Schwellwert kann dabei basierend auf einem der Folgenden bestimmt werden: der Varianz der negativen Zeitunterschiede; der Varianz der negativen Zeitunterschiede, die in einem Quantil der Zeitunterschiede liegen, insbesondere im 90% oder 95% Quantil; der Varianz der negativen Zeitunterschiede, deren Betrag kleiner als ein Maximalwert ist. Aufbauend auf der Varianz kann dann ein Vielfaches (insbesondere auch ungradzahliges Vielfaches) der Quadratwurzel der Varianz (also der Standardabweichung) den Schwellwert darstellen. Es kann vorgesehen sein, dass der Maximalwert abhängig davon, wie oft und wie weit der Ankerzeitpunkt in vorhergehenden Zuweisungen von Zeitstempeln zu früheren oder späteren Zeiten korrigiert werden musste. Ein Verfahren zum Zuweisen einer späteren Zeit zu einem Ankerzeitpunkt wird in der am selben Tag eingereichten Anmeldung mit dem Anmelderzeichen EM25382, veröffentlicht als WO2014090658, offenbart. Verfahren zum bestimmen der Varianz mehrerer Werte sind im Stand der Technik wohlbekannt.

Anstelle der Verwendung der Varianz zur Bestimmung des Schwellwertes können auch Cluster der negativen Zeitunterschiede gebildet werden. Aufbauend auf diesen kann dann der Schwellwert basierend auf der Grenze zwischen zwei Clustern bestimmt werden. Verfahren zur Bildung von Clustern der negativen Zeitunterschiede sind im Stand der Technik bekannt. Ein so bestimmter Schwellwert kann auch als dynamisches Gating bezeichnet werden.

In einer Weiterbildung umfasst das Bestimmen des zweiten Ankerzeitpunktes unter Berücksichtigung der negativen Zeitunterschiede, die nicht als Ausreißer zu klassifizieren sind, Folgendes: Auswählen eines einzelnen Zeitunterschiedes aus den negativen Zeitunterschieden, die nicht als Ausreißer zu klassifizieren sind; Setzen des zweiten Ankerzeitpunktes auf die Ankunftszeit des Datenpaketes, für dessen Ankunftszeit der ausgewählte einzelne Zeitunterschied bestimmt wurde. Der zweite Ankerzeitpunkt wird also anhand der Ankunftszeit eines Datenpakets bestimmt. Das Datenpaket wird dabei anhand des zugehörigen Zeitunterschiedes bestimmt, wobei nur Datenpakete in Frage kommen, deren Zeitunterschiede negative Zeitunterschiede sind. Im Detail können bei der Auswahl des einzelnen Zeitunterschiedes folgende Kriterien zur Anwendung kommen: der negative Zeitunterschied, dessen Betrag größer ist, als die Beträge der übrigen negativen Zeitunterschiede, die nicht als Ausreißer zu klassifizieren sind; oder der negative Zeitunterschied, der das Grenzelement eines Quantils der negativen Zeitunterschiede bildet, die nicht als Ausreißer zu klassifizieren sind, insbesondere des 90% Quantils. Das Grenzelement ist das letzte Element, das noch vom Quantil umfasst ist oder das erste, das gerade nicht mehr umfasst ist.

Alternativ kann das Bestimmen des zweiten Ankerzeitpunktes unter Berücksichtigung der negativen Zeitunterschiede, die nicht als Ausreißer zu klassifizieren sind, Folgendes umfassen: Bestimmen eines beschreibenden Wertes, insbesondere einer statistischen Maßzahl, für die negativen Zeitunterschiede oder eine Untergruppe der negativen Zeitunterschiede, die nicht als Ausreißer zu klassifizieren sind; Setzen des zweiten Ankerzeitpunktes auf den beschreibenden Wert. Im Detail kann der beschreibende Wert Folgendes sein: Der Mittelwert der negativen Zeitunterschiede oder einer Untergruppe davon, die nicht als Ausreißer zu klassifizieren sind, insbesondere der geometrische oder arithmetische Mittelwert; oder der Median der negativen Zeitunterschiede oder einer Untergruppe davon, die nicht als Ausreißer zu klassifizieren sind. Die Untergruppe der negativen Zeitunterschiede kann dabei so definiert sein, dass sie aus allen negativen Zeitunterschieden besteht, die in einem Quantil liegen und nicht als Ausreißer zu klassifizieren sind.

In einer anderen Weiterbildung umfasst das Bestimmen des zweiten Ankerzeitpunktes Folgendes: Setzen des zweiten Ankerzeitpunktes auf: Die Ankunftszeit des Datenpaketes, dessen bestimmter negativer Zeitunterschied nicht als Ausreißer zu klassifizieren ist und dessen Betrag des negativen Zeitunterschiedes größer ist, als die Beträge der übrigen negativen Zeitunterschiede. Es wird also die früheste Ankunftszeit der Zeitunterschiede, die nicht als Ausreißer zu klassifizieren sind, als neuer (zweiter) Ankerzeitpunkt verwendet. Alternativ kann der zweite Ankerzeitpunkt auch auf den Mittelwert, insbesondere den gewichteten Mittelwert, der negativen Zeitunterschiede gesetzt werden, die nicht als Ausreißer zu klassifizieren sind; oder den Grenzwert eines Quantils der negativen Zeitunterschiede, die nicht als Ausreißer zu klassifizieren sind, insbesondere des 90% Quantils. In den beiden letzten Fällen wird also der zweite Ankerzeitpunkt nicht auf eine bestimmte Ankunftszeit eines Datenpakets gesetzt, sondern errechnet. Natürlich kann es sich dabei ergeben, dass diese errechnete Zeit mit der Ankunftszeit eines Datenpaketes zusammenfällt.

Die Gruppe kann eine Mindestanzahl von Datenpaketen umfassen, wobei das betrachtete Datenpaket in der Gruppe von Datenpaketen mit umfasst sein kann, oder später als das zuletzt empfangene Datenpaket der Gruppe empfangen sein kann.

In einer Weiterbildung berücksichtigt das Bestimmen eines zweiten Ankerzeitpunktes auch eines oder mehrere der folgenden Kriterien: die Gesamtanzahl der von dem Sensor empfangenen Datenpakete seit dem Aufstarten eines das Verfahren ausführenden Systems; die Laufzeit seit dem Aufstarten eines das Verfahren ausführenden Systems; die Anzahl der Bestimmungen eines Ankerzeitpunktes seit dem Aufstarten eines das Verfahren ausführenden Systems; die Größe der Beträge oder eine statistische Maßzahl der Größe der Beträge aller bestimmten negativen Zeitunterschiede seit dem ersten eines das Verfahren ausführenden Systems. Das Verfahren wird generell von einem elektronischen System ausgeführt, das eine der nachfolgend beschriebenen Vorrichtungen sein kann. Dieses führt eines der oben dargestellten Verfahren wiederholt aus sobald es aufgestartet, also gestartet wird. Nach dem Start werden nach und nach neue Ankerzeitpunkte bestimmt und für zeitlich aufeinanderfolgende Datenpakete Ankunftszeiten bestimmt. Das Verfahren wird also fortlaufend ausgeführt. Die während der fortlaufenden Ausführung gewonnenen Erkenntnisse werden gemäß dieser Weiterbildung bei der Bestimmung des zweiten Ankerzeitpunktes berücksichtigt. Läuft das System schon lange und liegt damit eine große Anzahl von Datenpaketen vor, so kann davon ausgegangen werden, dass der Ankerzeitpunkt "eingeschwungen" ist. Änderungen an diesem sollten dann also nur in kleinen Beträgen vorgenommen werden. Dies kann zum Beispiel durch einen zusätzlichen Faktor (<1) erreicht werden, mit dem die negativen Zeitunterschiede, die nicht als Ausreißer zu klassifizieren sind, multipliziert werden vor der Bestimmung des zweiten Ankerzeitpunktes. Ein weiteres Kriterium berücksichtigt, ob sich zeigt, dass der Sensor und die Paketübertragung stabil arbeiten, also wenig oder kein Ausreißer produziert wird beziehungsweise werden. In diesem Fall kann auf leichte Änderungen, also größere Beträge der negativen Zeitunterschiede als bisher bestimmt, genauer oder schneller reagiert werden. Sind die Ankunftszeiten der Datenpakete hingegen seit dem Aufstart häufig weit gestreut und unregelmäßig muss mit der Anpassung des Zeitstempels vorsichtiger erfolgen, d.h. erst bei einer wiederholten Bestätigung von frühen Ankunftszeiten.

In einem anderen Aspekt umfasst eine Vorrichtung eine elektronische Recheneinheit (hierin auch Verarbeitungseinheit genannt), die dazu eingerichtet ist, ein Verfahren nach einem der vorstehend vorgestellten Verfahren auszuführen. Die elektronische Recheneinheit kann ein Mikrocontroller, ein Computer oder dedizierte Schaltkreise sein, gegebenenfalls mit den benötigten Schnittstellen. Die Recheneinheit kann programmtechnisch einrichtbar sein. In einem weiteren Aspekt umfasst ein Kraftfahrzeug eine solche Vorrichtung.

In einem weiteren Aspekt umfasst ein Computerprogramm Anweisungen zum Ausführen eines der oben vorgestellten Verfahren. Die Anweisungen des Computerprogramms können einen Computer dazu veranlassen die Schritte eines der oben dargestellten Verfahren auszuführen.

KURZE BESCHREIBUNG DER ZEICHNUNGEN

Fig. 1 zeigt das Schema zur Zuweisung eines Zeitstempels zu empfangenen Datenpaketen.

Fig. 2 zeigt schematisch das Entstehen von Fehlern bei der Bestimmung eines Zeitstempels gemäß dem in Bezug auf Fig. 1 erläuterten Schema.

Fig. 3 zeigt ein Flussdiagramm zur Ausführung der Erfindung gemäß einem Ausführungsbeispiel.

Fig. 4 zeigt ein Flussdiagramm zur Ausführung der Erfindung gemäß einem Ausführungsbeispiel.

Fig. 5 zeigt ein Flussdiagramm zum Zuweisen eines adaptierten Zeitstempels, wie es in einem Ausführungsbeispiel verwendet werden kann.

Fig. 6 zeigt ein Flussdiagramm zum Schätzen der Zykluszeit, wie es in einem Ausführungsbeispiel verwendet werden kann.

Gleiche Bezugszeichen oder Formelzeichen beziehen sich auf sich entsprechende Elemente über die Figuren hinweg.

DETAILLIERTE BESCHREIBUNG DES AUSFÜHRUNGSBEISPIELS

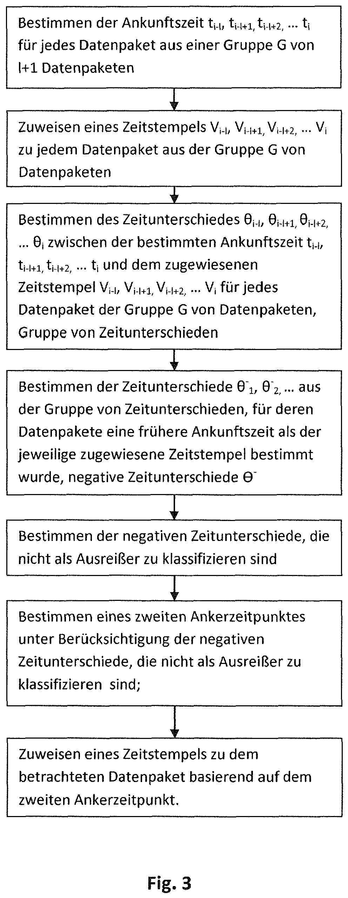

Fig. 3 zeigt ein Flussdiagramm zur Ausführung der Erfindung gemäß einem Ausführungsbeispiel zum Zuweisen eines Zeitstempels zu dem betrachteten Datenpaket. Das betrachtete Datenpaket kann Teil einer Gruppe G von Datenpaketen sein. Hier soll davon ausgegangen werden, dass das zuletzt empfangene Datenpaket i Teil der Gruppe G ist. Es ist aber auch denkbar, dass das Datenpaket i nicht Teil der Gruppe G ist und beispielsweise nach dem letzt-empfangenen Datenpaket der Gruppe G empfangen wird. Zunächst wird die Ankunftszeit $t_{i-l}$, $t_{i-l+1}$, $t_{i-l+2}$, ... $t_i$ für jedes Datenpaket aus einer Gruppe G von l+1 Datenpaketen bestimmt. Diesen werden die Zeitstempel $V_{i-l}$, $V_{i-l+1}$, $V_{i-l+2}$, ... $V_i$ zugewiesen und die Zeitunterschiede $\theta_{i-l}$, $\theta_{i-l+1}$, $\theta_{i-l+2}$, ... $\theta_i$ zwischen der bestimmten Ankunftszeit $t_{i-l}$, $t_{i-l+1}$, $t_{i-l+2}$, ... $t_i$ und dem zugewiesenen Zeitstempel $V_{i-l}$, $V_{i-l+1}$, $V_{i-l+2}$, ... $V_i$ für jedes Datenpaket der Gruppe G bestimmt. Diese Zeitunterschiede werden im Folgenden mit dem Begriff Gruppe von Zeitunterschieden bezeichnet. Anschließend werden die Zeitunterschiede $\theta^-_1$, $\theta^-_2$, ... aus der Gruppe von Zeitunterschieden bestimmt, für deren Datenpakete eine frühere Ankunftszeit als der jeweilige zugewiesene Zeitstempel bestimmt wurde, was hierin als negative Zeitunterschiede $\Theta^-$ bezeichnet wird. Aus diesen negativen Zeitunterschieden $\Theta^-$ werden nun die Zeitunterschiede bestimmt, die nicht als Ausreißer zu klassifizieren sind. Aufbauend auf diesen bestimmten Zeitunterschieden wiederum wird ein zweiter Ankerzeitpunkt bestimmt, basierend auf dem erneut ein Zeitstempel $V_i$ zu dem betrachteten Datenpaket zugewiesen wird. Dieser zweite Ankerzeitpunkt kann auch zum Zuweisen von Zeitstempeln weiterer empfangener Datenpakete $V_{i+1}$, $V_{i+2}$, ... dienen.

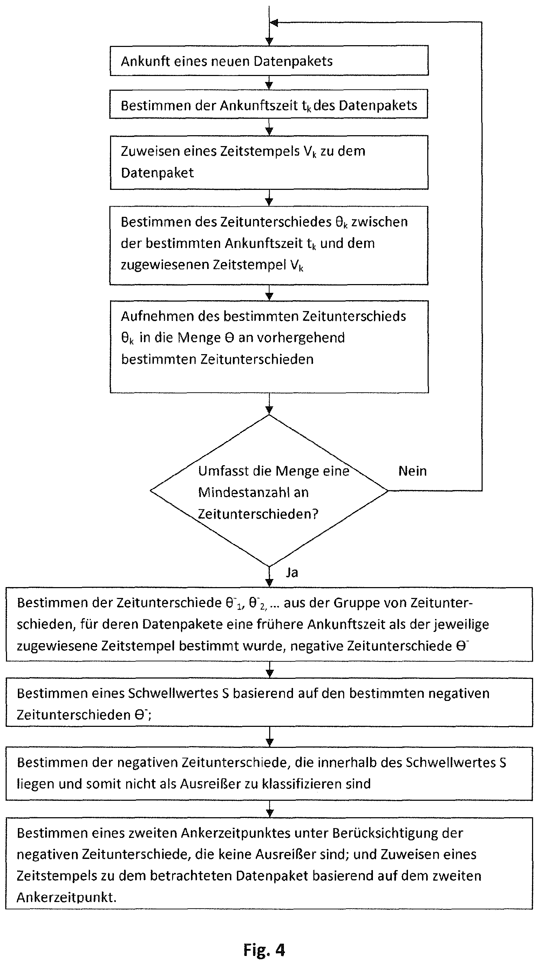

Fig. 4 zeigt ein Flussdiagramm zur Ausführung der Erfindung gemäß einem Ausführungsbeispiel. In diesem Beispiel werden die Schritte bis auf die letzten drei für jedes empfangene Datenpaket einzeln ausgeführt. Sind die für jedes Datenpaket einzeln ausgeführten Schritte für alle Datenpakete der Gruppe ausgeführt, so bedeutet dies, dass die Ankunftszeiten für jedes Datenpaket der Gruppe bestimmt und die Zeitstempel für jedes Datenpaket der Gruppe zugewiesen sind.

Nach der Ankunft eines neuen Datenpakets wird für jedes empfangene Datenpaket k wird die Ankunftszeit $t_k$ bestimmt und diesem ein Zeitstempel $V_k$ zugewiesen sowie der Zeitunterschied $\theta_k$ bestimmt und in eine Menge $\Theta$ aufgenommen. Sobald die Menge eine Mindestanzahl an Elementen umfasst, meist eine größere Anzahl, werden die negativen Zeitunterschiede $\Theta^-$ bestimmt. Dies kann in einer typischen Implementierung dadurch geschehen, dass alle Zeitunterschiede kleiner Null ausgewählt werden.

Aufbauend auf diesen Zeitunterschieden $\Theta^-$ wird dann ein Schwellwert S bestimmt. Hierzu kann die Berechnung der Varianz der negativen Zeitunterschiede var($\Theta^-$) als Vorschritt vorgesehen sein. Der Schwellwert S selbst bestimmt sich dann als ungradzahliges Vielfaches g der Standardabweichung:

$$S = g * \sqrt{var(\Theta^-)}.$$ "g" kann beispielsweise Werte von 2; 2,3; 3; 3,1 annehmen und kann durch Versuche oder aufgrund von Wahrscheinlichkeitsverteilungen der negativen Zeitunterschiede bestimmt werden.

Anschließend werden die negativen Zeitunterschiede bestimmt, die innerhalb des Schwellwertes S liegen, deren Betrag also kleiner als der Schwellwert S ist. Für diese gilt: $|\theta_k^-| < S$. Diese negativen Zeitunterschiede sind dann jene, die nicht als Ausreißer zu klassifizieren sind. Generell ist es denkbar die negativen Zeitunterschiede nicht nur nach Ausreißer und Nicht-Ausreißer zu klassifizieren, sonder noch weitere Kategorien vorzusehen, beispielsweise für Grenzfälle. Zeitunterschiede, die beispielsweise als Grenzfälle klassifiziert sind, können ebenfalls im weiteren Verfahren zur Bestimmung des zweiten Ankerzeitpunktes mit verwendet werden.

Bei der Bestimmung des Schwellwertes S können ebenfalls Varianten zum Einsatz kommen. So kann vorgesehen sein zur Varianzbestimmung nicht alle negativen Zeitunterschiede heranzuziehen, sondern sich auf solche zu beschränken, deren Betrag kleiner als ein Maximalwert ist. Es kann auch vorgesehen sein, nur negative Zeitunterschiede zu berücksichtigen, deren Betrag kleiner ist, als der des negativen Zeitunterschiedes, der ein bestimmtes Quantil markiert, beispielsweise das 95% Quantil. Ein anderer Ansatz zur Bestimmung des Schwellwertes S kann die Bildung von Clustern der negativen Schwellwerte sein. Aufbauend auf der Grenze zwischen Clustern kann dann der Schwellwert bestimmt werden.

Alternativ kann aufbauend auf den gebildeten Clustern, ein bestimmtes Cluster oder mehrere Cluster selbst als Ausreißer definiert werden. Die verbleibenden Cluster enthalten dann negative Zeitunterschiede, die nicht als Ausreißer zu klassifizieren sind.

Schließlich wird der zweite Ankerzeitpunktes unter Berücksichtigung der negativen Zeitunterschiede, die nicht als Ausreißer zu klassifizieren sind, bestimmt. Hierfür kann insbesondere der betragsmäßig größte negative Zeitunterschied, der nicht als Ausreißer zu klassifizieren ist, bestimmt werden. Die Ankunftszeit des zugehörigen Datenpakets wird dann als zweiter Ankerzeitpunkt verwendet. Darüber hinaus sind auch Verfahren denkbar, die den zweiten Ankerzeitpunkt nicht direkt auf einen Ankunftszeitpunkt setzen, sondern aus mehreren negativen Zeitunterschieden, die nicht als Ausreißer zu klassifizieren sind, einen Zeitpunkt errechnen, der dann als zweiter Ankerzeitpunkt dient. Beispielsweise kann ein Mittelwert errechnet werden, möglicherweise gewichtet, oder die Grenze eines Quantils der negativen Zeitunterschiede, die nicht als Ausreißer klassifiziert werden, als zweiter Ankerzeitpunkt verwendet werden.

Anschließend wird ein Zeitstempel zu dem betrachteten Datenpaket basierend auf dem zweiten Ankerzeitpunkt zugewiesen.

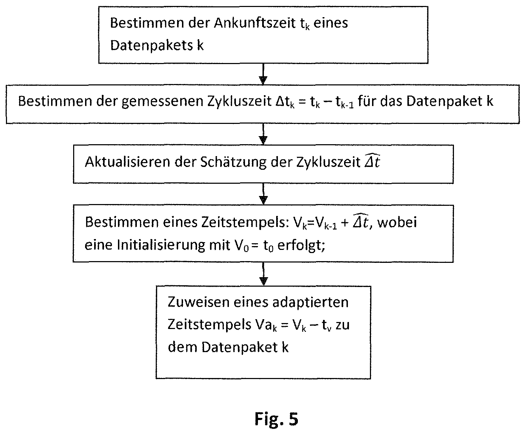

Fig. 5 zeigt ein Flussdiagramm zum Zuweisen eines Zeitstempels und eines adaptierten Zeitstempels, wie es in einem Ausführungsbeispiel verwendet werden kann und damit Teil eines Ausführungsbeispiels sein kann. In dem hier dargestellten Ablauf werden für die empfangenen Datenpakete der Gruppe von Datenpaketen einzeln Ankunftszeiten bestimmt und Zeitstempel sowie adaptierte Zeitstempel zugewiesen. Sobald die Schritte für jedes Datenpaket der Gruppe von Datenpaketen ausgeführt sind, sind für jedes Datenpakete der Gruppe die Ankunftszeiten bestimmt und die Zeitstempel und adaptierten Zeitstempel zugewiesen.

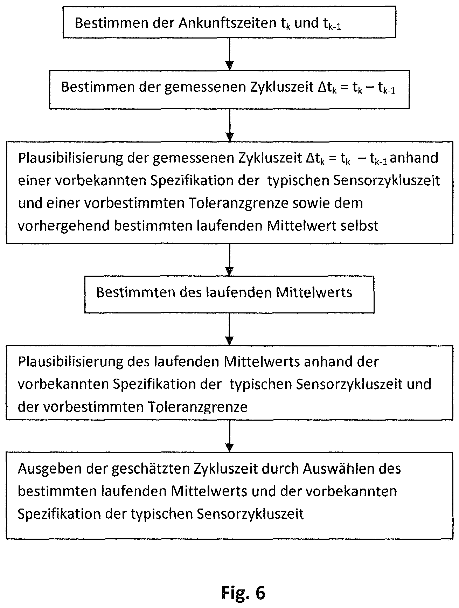

Es wird damit begonnen, die Ankunftszeit $t_k$ eines Datenpakets k zu bestimmen. Daraufhin wird die gemessene Zykluszeit $\Delta t_k = t_k - t_{k-1}$ für das Datenpaket k bestimmt. Aufbauend auf diesem wird die Schätzung der Zykluszeit $\widehat{\Delta t}$ aktualisiert. Die Schätzung der Zykluszeit kann als ein laufender Mittelwert ausgeführt werden, wie beispielsweise mit Bezug auf Fig. 6 dargestellt. Nachfolgend wird diese Zykluszeit benutzt um einen Zeitstempel $V_k$ für das Datenpaket festzulegen gemäß der Formel $V_k = V_{k-1} + \widehat{\Delta t}$, die mit $V_0 = t_0$ initialisiert wird. Anschließend wird dem Datenpaket der adaptierte Zeitstempel $Va_k = V_k - t_v$ zugewiesen.

In diesem Beispiel unterscheidet sich der Zeitstempel $V_k$ vom adaptierten Zeitstempel $Va_k$ dadurch, dass noch eine Verarbeitungszeit $t_v$ vom Zeitstempel $V_k$ abgezogen wird. Diese Vorgehensweise basiert auf dem Modell, dass ausgehend vom tatsächlichen Messzeitpunkt des Sensors eine minimale und nicht unterschreitbare Verarbeitungszeit $t_v$ die Ankunftszeit des Datenpakets mit den Sensorinformationen verzögert. Die Zeit, zu der das Datenpaket dann tatsächlich bei der Verarbeitungseinheit ankommt, ist darüber hinaus noch um eine gewisse zufällige Zeit länger, den sogenannten Jitter. Der Jitter ist eine zufällige Zeitverzögerung größer Null. Durch die Berücksichtigung der Verarbeitungszeit $t_v$ kann der adaptierte Zeitstempel den tatsächlichen Messzeitpunkt des Sensors verbessert schätzen. Die Verarbeitungszeit $t_v$ kann durch im Stand der Technik bekannte Verfahren, wie eine Laufzeitmessung unter Idealbedingungen oder Versuchsreihen bestimmt werden. Die Modellannahme für die bestimmte Ankunftszeit $t_k$ ist somit der tatsächliche Zeitpunkt der Sensormessung, die zum Datenpaket k gehört, + $t_v$ + $j_k$, wobei $j_k$ den Jitter für das Datenpaket k beschreibt. Mit anderen Worten: Die Modellannahme für die bestimmte Ankunftszeit ist, dass das Datenpaket um die Verarbeitungszeit und den Jitter später ankommt als der tatsächliche Zeitpunkt der Sensormessung.

Fig. 6 zeigt ein Flussdiagramm zum Schätzen der Zykluszeit, wie es in einem Ausführungsbeispiel verwendet werden kann und damit Teil eines Ausführungsbeispiels sein kann. Zunächst werden gegebenenfalls durch Messung die Ankunftszeiten $t_k$ und $t_{k-1}$ von zwei aufeinanderfolgenden Datenpaketen k und k-1 bestimmt, deren Differenz die gemessene Zykluszeit $\Delta t_k$ = $t_k$ - $t_{k-1}$ darstellt. Diese gemessene Zykluszeit wird anhand einer vorbekannten Spezifikation der typischen Sensorzykluszeit (beispielsweise eine gespeicherte Angabe des Sensorherstellers) und einer vorbestimmten Toleranzgrenze (beispielsweise in einer Konfigurationsdatei gespeichert) sowie dem vorhergehend bestimmten laufenden Mittelwert selbst plausibilisiert. Falls die gemessene Zykluszeit für nicht plausibel befunden wird, kann die vorbestimmte Spezifikation oder der vorhergehend berechnete Mittelwert ausgegeben werden. Wird die gemessene Zykluszeit für plausibel befunden, so wird der laufende Mittelwert bestimmt. Dies kann über die Formel $\widehat{\Delta t_k} = \left(1 - \frac{1}{n}\right)\widehat{\Delta t_{k-1}} + \frac{1}{n}\Delta t_k$ berechnet werden, wobei n das Minimum aus einem vorgegebenen Wert N und k sein kann (k ist die absolute Zählung der empfangenen Datenpakete). Anschließend wird der laufende Mittelwert anhand der vorbekannten Spezifikation der typischen Sensorzykluszeit und der vorbestimmten Toleranzgrenze plausibilisiert. Falls der Mittelwert für nicht plausibel befunden wird, wird die vorbestimmte Spezifikation ausgegeben. Falls der Mittelwert plausibel ist, wird dieser ausgegeben.

**Patentansprüche**

1. Verfahren zum Zuweisen eines Zeitstempels zu einem betrachteten Datenpaket, das ebenso wie eine Gruppe empfangener Datenpakete von einem zyklisch arbeitenden und Datenpakete sendenden Sensor empfangen wird, wobei das betrachtete Datenpaket insbesondere in der Gruppe empfangener Datenpakete umfasst ist, wobei das Verfahren durch eine Verarbeitungseinheit ausgeführt wird, umfassend:

Bestimmen der Ankunftszeit für jedes Datenpaket der Gruppe von empfangenen Datenpaketen;
Zuweisen eines Zeitstempels zu jedem Datenpaket der Gruppe von Datenpaketen basierend auf einem ersten Ankerzeitpunkt, nämlich der Ankunftszeit eines vom Sensor gesendeten Datenpakets, das die kürzeste Laufzeit vom Sensor zur Verarbeitungseinheit aufweist;
Bestimmen des Zeitunterschiedes zwischen der bestimmten Ankunftszeit und dem zugewiesenen Zeitstempel für jedes Datenpaket der Gruppe von Datenpaketen, im Weiteren bezeichnet als Gruppe von Zeitunterschieden;
Bestimmen der Zeitunterschiede aus der Gruppe von Zeitunterschieden, für deren Datenpakete eine frühere Ankunftszeit als der jeweilige zugewiesene Zeitstempel bestimmt wurde, im Weiteren bezeichnet als negative Zeitunterschiede;
Bestimmen der negativen Zeitunterschiede, die nicht als Ausreißer zu klassifizieren sind;
Bestimmen eines zweiten Ankerzeitpunktes unter Berücksichtigung der negativen Zeitunterschiede, die nicht als Ausreißer zu klassifizieren sind;
Zuweisen eines erneuten Zeitstempels zu dem betrachteten Datenpaket basierend auf dem zweiten Ankerzeitpunkt.

2. Verfahren nach Anspruch 1, wobei das Bestimmen der negativen Zeitunterschiede, die nicht als Ausreißer zu klassifizieren sind, Folgendes umfasst:

Bestimmen eines Schwellwertes basierend auf den bestimmten negativen Zeitunterschieden;
Bestimmen der negativen Zeitunterschiede, die innerhalb des Schwellwertes liegen, insbesondere der negativen Zeitunterschiede, deren Betrag kleiner als der Betrag des Schwellwerts ist.

3. Verfahren nach Anspruch 2, wobei der Schwellwert basierend auf einem der Folgenden bestimmt wird:

- der Varianz der negativen Zeitunterschiede;
- der Varianz der negativen Zeitunterschiede, die in einem Quantil der Zeitunterschiede liegen, insbesondere im 90% oder 95% Quantil;
- der Varianz der negativen Zeitunterschiede, deren Betrag kleiner als ein Maximalwert ist;

Und insbesondere basierend auf einem Vielfachen, insbesondere auch ungradzahligen Vielfachen, der Quadratwurzel der so bestimmten Varianz.

4. Verfahren nach Anspruch 2, wobei das Bestimmen des Schwellwertes umfasst:

Bilden von Clustern der negativen Zeitunterschiede;
Bestimmen des Schwellwertes basierend auf der Grenze zwischen zwei Clustern.

5. Verfahren nach Anspruch 1, wobei das Bestimmen der negativen Zeitunterschiede, die nicht als Ausreißer zu klassifizieren sind, folgendes umfasst:

Bilden von Clustern der negativen Zeitunterschiede;
Bestimmen eines oder mehrerer Cluster, die als Ausreißer klassifiziert werden.

**6.** Verfahren nach einem der vorhergehenden Ansprüche, wobei das Bestimmen des zweiten Ankerzeitpunktes unter Berücksichtigung der negativen Zeitunterschiede, die nicht als Ausreißer zu klassifizieren sind, Folgendes umfasst:

Auswählen eines einzelnen Zeitunterschiedes aus den negativen Zeitunterschieden, die nicht als Ausreißer zu klassifizieren sind;
Setzen des zweiten Ankerzeitpunktes auf die Ankunftszeit des Datenpaketes, für dessen Ankunftszeit der ausgewählte einzelne Zeitunterschied bestimmt wurde.

**7.** Verfahren nach Anspruch 6, wobei das Auswählen des einzelnen Zeitunterschiedes folgendes umfasst:

Auswählen des negativen Zeitunterschiedes, dessen Betrag größer ist, als die Beträge der übrigen negativen Zeitunterschiede, die nicht als Ausreißer zu klassifizieren sind; oder
Auswählen des negativen Zeitunterschieds, der das Grenzelement eines Quantils der negativen Zeitunterschiede bildet, die nicht als Ausreißer zu klassifizieren sind, insbesondere des 90% Quantils.

**8.** Verfahren nach einem der Ansprüche 1 bis 5, wobei das Bestimmen des zweiten Ankerzeitpunktes unter Berücksichtigung der negativen Zeitunterschiede, die nicht als Ausreißer zu klassifizieren sind, Folgendes umfasst:

Bestimmen eines beschreibenden Wertes, insbesondere einer statistischen Maßzahl, für die negativen Zeitunterschiede oder eine Untergruppe der negativen Zeitunterschiede, die nicht als Ausreißer zu klassifizieren sind;
Setzen des zweiten Ankerzeitpunktes auf den beschreibenden Wert;

wobei der beschreibende Wert eines der Folgenden ist:

Der Mittelwert der negativen Zeitunterschiede oder einer Untergruppe davon, die nicht als Ausreißer zu klassifizieren sind, insbesondere der geometrische oder arithmetische Mittelwert; oder
Der Median der negativen Zeitunterschiede oder einer Untergruppe davon, die nicht als Ausreißer zu klassifizieren sind;
Wobei die Untergruppe insbesondere ein Quantil der negativen Zeitunterschiede ist.

**9.** Verfahren nach einem der vorhergehenden Ansprüche, wobei die Gruppe eine Mindestanzahl von Datenpaketen umfasst, und/oder wobei das betrachtete Datenpaket in der Gruppe von Datenpaketen mit umfasst ist, oder später als das zuletzt empfangene Datenpaket der Gruppe empfangen wird.

**10.** Verfahren nach einem der vorhergehenden Ansprüche, wobei das Bestimmen eines zweiten Ankerzeitpunktes unter Berücksichtigung der negativen Zeitunterschiede, die nicht als Ausreißer zu klassifizieren sind, auch eines oder mehrere der folgenden Kriterien berücksichtigt:

- die Gesamtanzahl der von dem Sensor empfangenen Datenpakete seit dem Aufstarten eines das Verfahren ausführenden Systems;
- die Laufzeit seit dem Aufstarten eines das Verfahren ausführenden Systems;
- die Anzahl der Bestimmungen eines Ankerzeitpunktes seit dem Aufstarten eines das Verfahren ausführenden Systems;
- die Größe der Beträge oder eine statistische Maßzahl der Größe der Beträge aller bestimmten negativen Zeitunterschiede seit dem Aufstarten eines das Verfahren ausführenden Systems.

**11.** Vorrichtung, umfassend eine elektronische Recheneinheit, die dazu eingerichtet ist, ein Verfahren nach einem der vorhergehenden Ansprüche auszuführen.

**12.** Kraftfahrzeug, umfassend eine Vorrichtung nach Anspruch 11.

**13.** Computerprogramm, umfassend Anweisungen, die bei der Ausführung des Programms durch einen Computer diesen veranlassen, eines der Verfahren nach den Ansprüchen 1 bis10 auszuführen.

**Claims**

**1.** A method for assigning a timestamp to a specific data packet which, just like a group of received data packets, is received by a sensor that operates cyclically and sends data packets, the specific data packet in particular being part of the group of received data packets, the method being performed by a processing unit and comprising the following steps:

determining the time of arrival for each data packet in the group of received data packets;

assigning a timestamp to each data packet in the group of data packets on the basis of a first time of arrival, specifically the time of arrival of a data packet sent by the sensor, which data packet has the shortest transit time from the sensor to the processing unit;

determining the time difference between the specific future time and the assigned timestamp for each data packet of the group of data packets, also referred to as a group of time differences;

determining the time differences from the group of time differences for the data packets for which it has been determined that the time of arrival preceded the particular assigned timestamp, also referred to as negative time differences;

determining the negative time differences that are not to be classified as outliers;

determining a second reference point in time taking into account the negative time differences that are not to be classified as outliers;

assigning a new timestamp to the specific data packet on the basis of the second reference point in time.

2. A method according to claim 1, wherein the determination of the negative time differences which are not to be classified as outliers comprises the following steps:

determining a threshold value on the basis of the determined negative time differences;

determining the negative time differences that lie within the threshold value, in particular the negative time differences of which the magnitude is smaller than the magnitude of the threshold value.

3. A method according to claim 2, wherein the threshold value is determined on the basis of one of the following conditions:

- the variance of the negative time differences;
- the variance of the negative time differences which lie in a quantile of the time differences, in particular in the 90th or 95th percentile;
- the variance of the negative time differences of which the magnitude is smaller than a maximum value;

and in particular on the basis of a multiple, in particular also an odd-numbered multiple, of the square root of the variance thus determined.

4. A method according to claim 2, wherein the determination of the threshold value comprises:

forming clusters of the negative time differences; and

determining the threshold value on the basis of a boundary between two clusters.

5. A method according to claim 1, wherein the determination of the negative time differences which are not to be classified as outliers comprises the following steps:

forming clusters of the negative time differences; and

determining one or more of the clusters which are classified as outliers.

6. A method according to one of the preceding claims, wherein the determination of the second reference point in time taking into account the negative time differences which are not to be classified as outliers comprises the following steps:

selecting a single time difference from the negative time differences which are not to be classified as outliers; and

setting the second reference point in time to the time of arrival of the data packet for which the time of arrival of the selected single time difference has been determined.

7. A method according to claim 6, wherein the selection of the single time difference comprises the following steps:

selecting the negative time difference of which the magnitude is greater than the magnitudes of the remaining negative time differences which are not to be classified as outliers; or

selecting the negative time difference which forms the boundary element of a quantile of the negative time differences which are not to be classified as outliers, in particular of the 90th percentile.

8. A method according to one of claims 1 to 5, wherein the determination of the second reference point in time taking into account the negative time differences which are not to be classified as outliers comprises the following steps:

determining a descriptive value, in particular a statistical measure, for the negative time differences or a subgroup of the negative time differences which are not to be classified as outliers;

setting the second reference point in time to the descriptive value;

the descriptive value being one of the following:

the mean value of the negative time differences, or a subgroup thereof, which are not to be classified as outliers, in particular the geometric or arithmetic mean value; or
the median of the negative time differences, or a subgroup thereof, which are not to be classified as outliers;
the subgroup in particular being a quantile of the negative time differences.

9. A method according to one of the preceding claims, wherein the group comprises a minimum number of data packets, and/or wherein the specific data packet is included in the group of data packets or is received later as the last-received data packet of the group.

10. A method according to one of the preceding claims, wherein the determination of a second reference point in time taking into account the negative time differences which are not to be classified as outliers also takes into account one or more of the following criteria:

- the total number of data packets received by the sensor since the start-up of a system performing the method;
- the transit time since the start-up of a system performing the method;
- the number of determinations of a reference point in time since the start-up of a system performing the method; and
- the size of the magnitudes or a statistical measure of the size of the magnitudes of all determined negative time differences since the start-up of a system performing the method.

11. A device comprising an electronic computing unit that is configured to perform a method according to any one of the preceding claims.

12. A motor vehicle comprising a device according to claim 11.

13. A computer program comprising instructions which, when the program is run by a computer, prompt the computer to perform one of the methods according to claims 1 to 10.

**Revendications**

1. Procédé permettant d'attribuer un horodatage à un paquet de données considéré qui est reçu ainsi qu'un groupe de paquets de données reçus provenant d'un détecteur travaillant de façon cyclique et transmettant des paquets de données, selon lequel le paquet de données considéré est, en particulier, contenu dans le groupe de paquets de données reçus, ce procédé étant mis en œuvre par une unité de traitement et comprenant des étapes consistant à :

déterminer le temps d'arrivée de chacun des paquets de données du groupe des paquets de données reçus,
attribuer un horodatage à chaque paquet de données du groupe de paquets de données sur le fondement d'un premier temps d'ancrage, à savoir le temps d'arrivée du paquet de données transmis par le détecteur qui a la durée la plus courte entre le détecteur et l'unité de traitement,
déterminer la différence de temps entre le temps d'arrivée déterminé et l'horodatage attribué pour chaque paquet de données du groupe de paquets de données, ci-après désignées comme groupe de différences de temps,
déterminer les différences de temps parmi le groupe des différences de temps, pour les paquets de données desquelles un temps d'arrivée plus ancien que l'horodatage respectif attribué a été déterminé, ci-après désigné comme différences de temps négatives,
déterminer les différences de temps négatives qui ne doivent pas être classées comme valeurs aberrantes,
déterminer un second temps d'ancrage en prenant en considération les différences de temps négatives qui ne doivent pas être classées comme valeurs aberrantes,
attribuer un nouvel horodatage au paquet de données considéré sur le fondement du second temps d'ancrage.

2. Procédé conforme à la revendication 1, selon lequel la détermination des différences de temps négatives qui ne doivent pas être classées comme valeurs aberrantes comporte les étapes suivantes consistant à :

déterminer une valeur de seuil sur le fondement des différences de temps négatives déterminées,
déterminer les différences de temps négatives qui sont situées dans la valeur de seuil, en particulier les différences de temps négatives dont la valeur est inférieure à la valeur de la valeur de seuil.

3. Procédé conforme à la revendication 2, selon lequel la valeur de seuil est déterminée sur le fondement des conditions suivantes,

- la variance des différences de temps négatives,
- la variance des différences de temps négatives qui sont situées dans une proportion de répartition des différences de temps, en particulier de 90% ou 95%,
- la variance des différences de temps négatives dont la valeur est inférieure à une valeur maximum, et
- en particulier, sur le fondement d'un multiple, en particulier également d'un multiple impair de la racine carrée de la variance ainsi déterminée.

4.  Procédé conforme à la revendication 2, selon lequel la détermination de la valeur de seuil comprend :

    la formation des grappes de différences de temps négatives,
    la détermination de la valeur de seuil sur le fondement de la limite entre deux grappes.

5.  Procédé conforme à la revendication 1, selon lequel la détermination des différences de temps négatives qui ne doivent pas être classées comme valeurs aberrantes comprend :

    la formation de grappe de différences de temps négatives,
    la détermination d'une ou plusieurs grappe(s) classée(s) comme valeurs) aberrante(s).

6.  Procédé conforme à l'une des revendications précédentes, selon lequel la détermination du second temps d'ancrage en prenant en considération les différences de temps négatives qui ne doivent pas être classées comme valeurs aberrantes comprend des étapes consistant à :

    sélectionner une différence de temps individuelle parmi les différences de temps négatives qui ne doivent pas être classées comme valeurs aberrantes,
    régler le second temps d'ancrage sur le temps d'arrivée du paquet de données pour les temps d'arrivée desquels la différence de temps individuelle sélectionnée a été déterminée.

7.  Procédé conforme à la revendication 6, selon lequel la sélection de la différence de temps individuelle comprend les étapes suivantes consistant à :

    sélectionner la différence de temps négative dont la valeur est supérieure aux valeurs des autres différences de temps négatives qui ne doivent pas être classées comme valeurs aberrantes, ou
    sélectionner la différence de temps négative qui forme l'élément limite d'une proportion de répartition des différences de temps négatives qui ne doivent pas être classées comme valeurs aberrantes, en particulier 90%.

8.  Procédé conforme à l'une des revendications 1 à 5, selon lequel la détermination du second point de temps d'ancrage en prenant en considération les différences de temps négatives qui ne doivent pas être classées comme valeurs aberrantes comprend les étapes suivantes consistant à :

    déterminer une valeur descriptive, en particulier une mesure statistique pour les différences de temps négatives ou un sous-groupe de différences de temps négatives qui ne doivent pas être classées comme valeurs aberrantes,
    régler le second temps d'ancrage sur la valeur descriptive, la valeur descriptive étant l'une des valeurs suivantes :

    - la valeur moyenne des différences de temps négatives ou d'un sous-groupe de différences de temps négatives qui ne doivent pas être classées comme valeurs aberrantes, en particulier, la valeur moyenne géométrique ou arithmétique, ou
    - la médiane des différences de temps négatives ou d'un sous-groupe de différences de temps négatives qui ne doivent pas être classées comme valeurs aberrantes,
    - le sous-groupe étant, en particulier, une proportion de répartition des différences de temps négatives.

9.  Procédé conforme à l'une des revendications précédentes, selon lequel le groupe renferme un nombre minimum de paquets de données et/ou le paquet de données considéré est renfermé dans le groupe de paquets de données ou est reçu plus tard que le paquet de données reçues en dernier lieu du groupe.

10. Procédé conforme à l'une des revendications précédentes, selon lequel la détermination d'un second temps d'ancrage en prenant en considération les différences de temps négatives qui ne doivent pas être considérées comme des valeurs aberrantes prend également en considération au moins l'un des critères suivants :

    le nombre total de paquets de données reçus par le détecteur depuis le démarrage d'un système mettant en œuvre le procédé,
    la durée depuis le démarrage d'un système mettant en œuvre le procédé,
    le nombre de déterminations d'un temps d'ancrage depuis le démarrage d'un système mettant en œuvre le procédé (le démarrage),

la valeur ou une mesure statistique de la valeur de toutes les différences de temps négatives déterminées depuis le démarrage d'un système mettant en œuvre le procédé.

11. Dispositif comprenant une unité de calcul électronique qui est réalisée pour permettre la mise en œuvre d'un procédé conforme aux revendications précédentes.

12. Véhicule comprenant un dispositif conforme à la revendication 11.

13. Produit-programme d'ordinateur comprenant des instructions qui, lors de la mise en œuvre du programme par un calculateur permettent à celui-ci la mise en œuvre d'un procédé conforme à l'une des revendications 1 à 10.

Sensor

Verarbeitungseinheit

**Fig. 1**

Sensor

Verarbeitungseinheit

**Fig. 2**

Bestimmen der Ankunftszeit $t_{i-l}$, $t_{i-l+1}$, $t_{i-l+2}$, ... $t_i$ für jedes Datenpaket aus einer Gruppe G von l+1 Datenpaketen

Zuweisen eines Zeitstempels $V_{i-l}$, $V_{i-l+1}$, $V_{i-l+2}$, ... $V_i$ zu jedem Datenpaket aus der Gruppe G von Datenpaketen

Bestimmen des Zeitunterschiedes $\theta_{i-l}$, $\theta_{i-l+1}$, $\theta_{i-l+2}$, ... $\theta_i$ zwischen der bestimmten Ankunftszeit $t_{i-l}$, $t_{i-l+1}$, $t_{i-l+2}$, ... $t_i$ und dem zugewiesenen Zeitstempel $V_{i-l}$, $V_{i-l+1}$, $V_{i-l+2}$, ... $V_i$ für jedes Datenpaket der Gruppe G von Datenpaketen, Gruppe von Zeitunterschieden

Bestimmen der Zeitunterschiede $\theta^-_1$, $\theta^-_2$, ... aus der Gruppe von Zeitunterschieden, für deren Datenpakete eine frühere Ankunftszeit als der jeweilige zugewiesene Zeitstempel bestimmt wurde, negative Zeitunterschiede $\theta^-$

Bestimmen der negativen Zeitunterschiede, die nicht als Ausreißer zu klassifizieren sind

Bestimmen eines zweiten Ankerzeitpunktes unter Berücksichtigung der negativen Zeitunterschiede, die nicht als Ausreißer zu klassifizieren sind;

Zuweisen eines Zeitstempels zu dem betrachteten Datenpaket basierend auf dem zweiten Ankerzeitpunkt.

**Fig. 3**

Ankunft eines neuen Datenpakets

↓

Bestimmen der Ankunftszeit $t_k$ des Datenpakets

↓

Zuweisen eines Zeitstempels $V_k$ zu dem Datenpaket

↓

Bestimmen des Zeitunterschiedes $\theta_k$ zwischen der bestimmten Ankunftszeit $t_k$ und dem zugewiesenen Zeitstempel $V_k$

↓

Aufnehmen des bestimmten Zeitunterschieds $\theta_k$ in die Menge $\Theta$ an vorhergehend bestimmten Zeitunterschieden

↓

Umfasst die Menge eine Mindestanzahl an Zeitunterschieden? — Nein

↓ Ja

Bestimmen der Zeitunterschiede $\theta^-_1$, $\theta^-_2$, ... aus der Gruppe von Zeitunterschieden, für deren Datenpakete eine frühere Ankunftszeit als der jeweilige zugewiesene Zeitstempel bestimmt wurde, negative Zeitunterschiede $\Theta^-$

↓

Bestimmen eines Schwellwertes S basierend auf den bestimmten negativen Zeitunterschieden $\Theta^-$;

↓

Bestimmen der negativen Zeitunterschiede, die innerhalb des Schwellwertes S liegen und somit nicht als Ausreißer zu klassifizieren sind

↓

Bestimmen eines zweiten Ankerzeitpunktes unter Berücksichtigung der negativen Zeitunterschiede, die keine Ausreißer sind; und Zuweisen eines Zeitstempels zu dem betrachteten Datenpaket basierend auf dem zweiten Ankerzeitpunkt.

**Fig. 4**

Bestimmen der Ankunftszeit $t_k$ eines Datenpakets k

↓

Bestimmen der gemessenen Zykluszeit $\Delta t_k = t_k - t_{k-1}$ für das Datenpaket k

↓

Aktualisieren der Schätzung der Zykluszeit $\widehat{\Delta t}$

↓

Bestimmen eines Zeitstempels: $V_k = V_{k-1} + \widehat{\Delta t}$, wobei eine Initialisierung mit $V_0 = t_0$ erfolgt;

↓

Zuweisen eines adaptierten Zeitstempels $Va_k = V_k - t_v$ zu dem Datenpaket k

**Fig. 5**

Bestimmen der Ankunftszeiten $t_k$ und $t_{k-1}$

Bestimmen der gemessenen Zykluszeit $\Delta t_k = t_k - t_{k-1}$

Plausibilisierung der gemessenen Zykluszeit $\Delta t_k = t_k - t_{k-1}$ anhand einer vorbekannten Spezifikation der typischen Sensorzykluszeit und einer vorbestimmten Toleranzgrenze sowie dem vorhergehend bestimmten laufenden Mittelwert selbst

Bestimmten des laufenden Mittelwerts

Plausibilisierung des laufenden Mittelwerts anhand der vorbekannten Spezifikation der typischen Sensorzykluszeit und der vorbestimmten Toleranzgrenze

Ausgeben der geschätzten Zykluszeit durch Auswählen des bestimmten laufenden Mittelwerts und der vorbekannten Spezifikation der typischen Sensorzykluszeit

**Fig. 6**

# EP 2 932 634 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014090658 A

**In der Beschreibung aufgeführte Nicht-Patentliteratur**

- Precise Timestamping and Temporal Synchronization in Multi-Sensor Fusion. **TOBIAS HUCK et al.** Intelligent Vehicles Symposium (IV). IEEE, 2011, 242-247